# EUROPEAN PATENT APPLICATION

(11) **EP 4 847 335 A1**
(43) Veröffentlichungstag der Anmeldung: **02.12.2026**
(21) Anmeldenummer: 24919306.1
(22) Anmeldetag: 25.01.2024
(51) Int. Cl.: B60W 40/09, B62D 6/00, B62D 5/06

(54) **SYSTEM UND VERFAHREN ZUR IDENTIFIZIERUNG DES EIN- UND AUS-HANDS-ZUSTANDS**

(71) Anmelder: Schaeffler Technologies AG & Co. KG, 91074 Herzogenaurach (DE)
(72) Erfinder: CHEN, Xiaobo, Shanghai 201804 (CN); DENG, Yuan, Shanghai 201804 (CN); YANG, Xi, Shanghai 201804 (CN)
(74) Vertreter: Schaeffler Technologies
(86) Internationale Anmeldenummer: PCT/CN2024/074022
(87) Internationale Veröffentlichungsnummer: WO 2025/156195

(57) **Zusammenfassung**

Es wird ein Verfahren zur Identifizierung eines Hands-on-/Hands-off-Zustands beschrieben. Das Verfahren umfasst: Tiefpassfilterung des Torsionsstab Momentsignals eines elektrohydraulischen Servolenkungssystems eines Fahrzeugs, um ein gefiltertes Torsionsstab Momentsignal zu erhalten (S101); Bestimmen eines Niederfrequenzfaktors basierend auf dem gefilterten Torsionsstab Momentsignal und der Winkelgeschwindigkeit des Lenkrads des Fahrzeugs (S102); Bestimmen eines Hochfrequenzfaktors basierend auf dem gefilterten Torsionsstab Momentsignal und der Winkelgeschwindigkeit des Lenkrads des Fahrzeugs (S103); Bestimmen eines Merkmalsfaktors basierend auf dem Hochfrequenzfaktor und dem Niederfrequenzfaktor (S104); sowie Identifizieren des Hands-on-/Hands-off-Zustands basierend auf dem Merkmalsfaktor (S105). Weiterhin wird ein System zur Identifizierung eines Hands-on-/Hands-off-Zustands offengelegt.

## Beschreibung

### Technisches Gebiet

Die vorliegende Anmeldung betrifft die Fahrzeugtechnik und insbesondere ein System und ein Verfahren zur Identifizierung eines Hands-on-/Hands-off-Zustands.

### Hintergrundtechnik

Bei mit intelligenten Fahrassistenzsystemen/Autonomiefunktionen ausgestatteten Fahrzeugen ist zur Vermeidung einer Fehlverwendung des Querführungssystems eine Hands-off-Erkennung erforderlich; zur Sicherstellung der Fahrerverfügbarkeit, wenn das automatisierte System eine Situation nicht bewältigen kann, ist zudem eine Hands-on-Erkennung notwendig. Die Identifizierung des Hands-on-/Hands-off-Zustands ist daher für Fahrassistenz- und Autonomiefunktionen von zentraler Bedeutung.

Derzeitige Ansätze werten zur Erkennung des Hands-on-/Hands-off-Zustands das Torsionsstab Momentsignal eines elektronischen/elektrohydraulischen Servolenkungssystems (Electric Hydraulic Power Steering, EHPS) anhand fester Schwellwerte und Zeiten aus. Solche Verfahren berücksichtigen überwiegend quasistatische Szenarien; da die Unterscheidbarkeit des Torsionsstab Momentsignals zwischen Hands-on und Hands-off oft gering ist, kann es zu Fehlklassifikationen kommen. Zudem ist es herausfordernd, in unterschiedlichen Anwendungsfällen robuste Schwellwerte einzustellen.

### Offenbarung der Erfindung

In einem Aspekt wird ein Verfahren zur Identifizierung eines Hands-on-/Hands-off-Zustands bereitgestellt. Das Verfahren umfasst:
- Durchführen einer Tiefpassfilterung eines Torsionsstab Momentsignals eines elektrohydraulischen Servolenkungssystems (EHPS) eines Fahrzeugs, um ein gefiltertes Torsionsstab Momentsignal zu erhalten;
- Bestimmen eines Niederfrequenzfaktors basierend auf dem gefilterten Torsionsstab Momentsignal und einer Winkelgeschwindigkeit eines Lenkrads des Fahrzeugs;
- Bestimmen eines Hochfrequenzfaktors basierend auf dem gefilterten Torsionsstab Momentsignal und der Winkelgeschwindigkeit des Lenkrads des Fahrzeugs;
- Bestimmen eines Merkmalsfaktors basierend auf dem Hochfrequenzfaktor und dem Niederfrequenzfaktor; sowie
- Identifizieren des Hands-on-/Hands-off-Zustands basierend auf dem Merkmalsfaktor.

In einem weiteren Aspekt wird ein System zur Identifizierung eines Hands-on-/Hands-off-Zustands bereitgestellt. Das System umfasst:
- ein Modul zur Torsionsstab Momentverarbeitung, eingerichtet, eine Tiefpassfilterung eines Momentsignals eines Torsionsstabs eines elektrohydraulischen Servolenkungssystems eines Fahrzeugs durchzuführen, um ein gefiltertes Momentsignal zu erhalten;
- ein Niederfrequenz Verarbeitungsmodul, eingerichtet, einen Niederfrequenzfaktor basierend auf dem gefilterten Momentsignal und einer Winkelgeschwindigkeit eines Lenkrads des Fahrzeugs zu bestimmen;
- ein Hochfrequenz Verarbeitungsmodul, eingerichtet, einen Hochfrequenzfaktor basierend auf dem gefilterten Momentsignal und der Winkelgeschwindigkeit des Lenkrads des Fahrzeugs zu bestimmen;
- ein Merkmalsverarbeitungsmodul, eingerichtet, einen Merkmalsfaktor basierend auf dem Hochfrequenzfaktor und dem Niederfrequenzfaktor zu bestimmen; und
- ein Zustandsverarbeitungsmodul, eingerichtet, den Hands-on-/Hands-off-Zustand basierend auf dem Merkmalsfaktor zu identifizieren.

In einem weiteren Aspekt wird ein Fahrzeugsteuergerät bereitgestellt, das einen Prozessor und einen Speicher mit computerlesbaren Instruktionen umfasst, wobei der Prozessor konfiguriert ist, das Verfahren gemäß den vorstehenden Ausführungen auszuführen. In einem weiteren Aspekt wird ein nicht-transitorisches, computerlesbares Medium mit Instruktionen bereitgestellt, die bei Ausführung durch einen oder mehrere Prozessoren das Verfahren gemäß den vorstehenden Ausführungen implementieren.

### Kurze Beschreibung der Zeichnungen

Zur Verdeutlichung werden nachfolgend die Zeichnungen kurz beschrieben. Für Fachleute sind daraus ohne erfinderisches Zutun weitere Varianten ableitbar. In den Zeichnungen zeigen:
- Figur 1 ein Flussdiagramm des Verfahrens zur Identifizierung des Hands-on-/Hands-off-Zustands;
- Figur 2 ein Schema der Torsionsstab Momentverarbeitung;
- Figur 3 ein Schema der Niederfrequenzverarbeitung;
- Figur 4 ein Schema der Hochfrequenzverarbeitung;
- Figur 5 ein Schema der Merkmalsverarbeitung;
- Figur 6 ein Schema der Zustandsverarbeitung;
- Figur 7 ein Wellenformdiagramm der Verfahrenswirkung;
- Figur 8 ein Blockdiagramm des Systems zur Identifizierung des Hands-on-/Hands-off-Zustands;
- Figur 9 ein Blockdiagramm des Moduls zur Torsionsstab Momentverarbeitung;
- Figur 10 ein Blockdiagramm des Hochfrequenz Verarbeitungsmoduls;
- Figur 11 ein Blockdiagramm des Merkmalsverarbeitungsmoduls;
- Figur 12 ein Blockdiagramm des Zustandsverarbeitungsmoduls; und
- Figur 13 ein Blockdiagramm eines Fahrzeugsteuergeräts.

### Ausführliche Beschreibung

Nachfolgend werden Merkmale und Ausführungsbeispiele detailliert beschrieben. Die konkreten Beispiele dienen der Erläuterung und nicht der Beschränkung.

Hinweis zu Terminologie: Relativbegriffe wie "erstes", "zweites" usw. dienen nur der Unterscheidung und implizieren keine Reihenfolge. "Umfassen" ist nichtausschließend zu verstehen.

Wie eingangs erläutert, ist eine zuverlässige Erkennung des Hands-on-/Hands-off-Zustands wesentlich. Bestehende Verfahren, die allein auf festen Schwellwerten des Torsionsstab Momentsignals eines EHPS basieren, sind in dynamischen Szenarien fehleranfällig. Die vorliegende Lösung nutzt die frequenzielle Charakteristik des Torsionsstab Momentsignals in Kombination mit der Winkelgeschwindigkeit des Lenkrads für eine robuste, echtzeitfähige Erkennung.

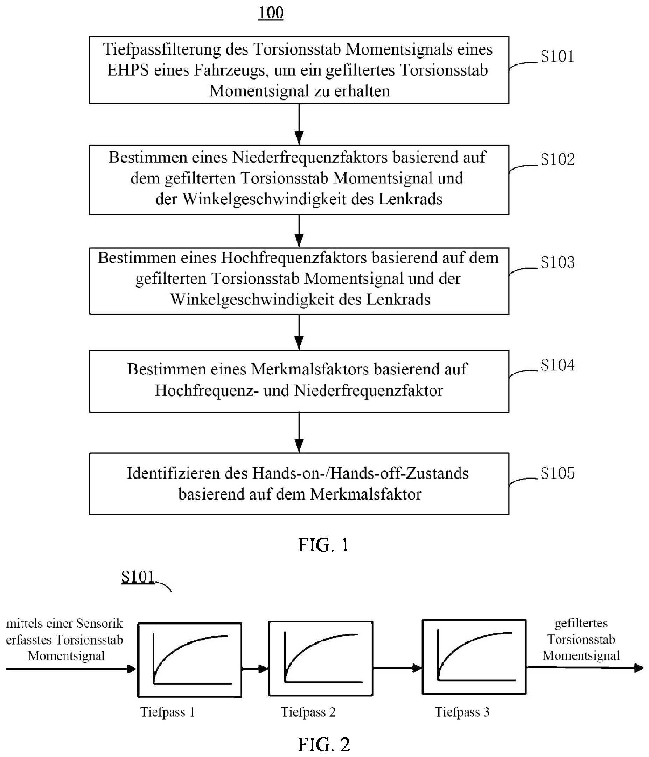

Figur 1 zeigt ein Verfahren 100 mit den Schritten S101-S105: S101: Tiefpassfilterung des Torsionsstab Momentsignals eines EHPS, um ein gefiltertes Torsionsstab Momentsignal zu erhalten. Das Signal wird mittels am Torsionsstab angeordneter Sensorik in Echtzeit erfasst. In einigen Ausführungen umfasst die Tiefpassfilterung eine kaskadierte Mehrstufen Tiefpassfilterung, um Verzögerungen gering zu halten und die Reaktionsfähigkeit zu sichern.

Figur 2 veranschaulicht S101 am Beispiel einer dreistufigen Tiefpassfilterung (Tiefpass 1, Tiefpass 2, Tiefpass 3). Es können mehr oder weniger Stufen eingesetzt werden.

S102: Bestimmen eines Niederfrequenzfaktors basierend auf dem gefilterten Torsionsstab Momentsignal und der Winkelgeschwindigkeit des Lenkrads, welche in Echtzeit erfasst werden kann. In einigen Ausführungen erfolgt die Bestimmung durch Tabellenabfrage in einem vorgegebenen Niederfrequenz Kennfeld, das Niederfrequenzfaktoren für Hochfrequenz- und Niederfrequenzbereiche des Torsionsstab Moments bei unterschiedlichen Lenkradwinkelgeschwindigkeiten bereitstellt.

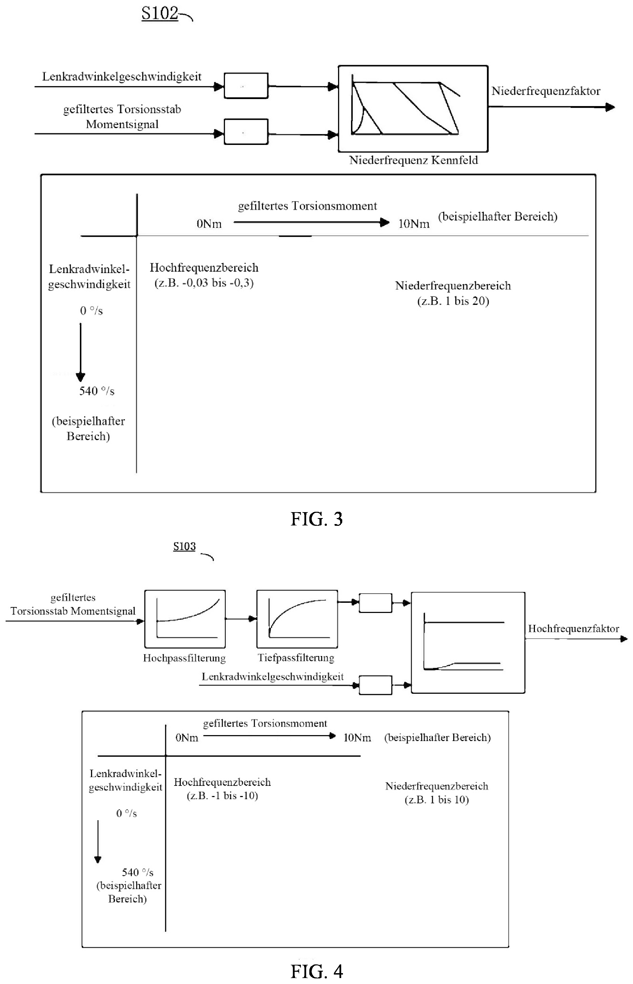

Systemseitig wechselt das Signal beim Übergang von Hands-off zu Hands-on deutlich vom Hochfrequenz- in den Niederfrequenzbereich. Das Kennfeld identifiziert die Torsionsmomentpunkte (Momentwerte), bei denen - abhängig von der Lenkradwinkelgeschwindigkeit - in den Niederfrequenzbereich übergegangen wird; höhere Winkelgeschwindigkeiten bedingen typischerweise größere Momentwerte an der Grenze zum Niederfrequenzbereich und kompensieren so Trägheits- und Dämpfungseinflüsse. Figur 3 zeigt S102: Das Niederfrequenz Kennfeld kann z. B. auf der Abszisse das gefilterte Torsionsmoment (etwa 0-10 Nm) und auf der Ordinate die Lenkradwinkelgeschwindigkeit (z. B. 0-540 °/s) abbilden. In der Niederfrequenzregion werden typischerweise positive, größere Werte (z. B. 1-20) gewählt, um die Hands-on-Erkennung zu beschleunigen; in der Hochfrequenzregion (z. B. Momentwelligkeit 0-0,1 Nm) werden negative, kleinere Werte (z. B. -0,03 bis -0,3) verwendet, um Merkmale der Hochfrequenzregion abzuschwächen, aber zu erhalten.

S103: Bestimmen eines Hochfrequenzfaktors basierend auf dem gefilterten Torsionsstab Momentsignal und der Winkelgeschwindigkeit. Die Bestimmung kann vor, nach oder parallel zu S102 erfolgen. In einigen Ausführungen umfasst dies: Hochpassfilterung des gefilterten Torsionsstab Momentsignals zur Extraktion eines Hochfrequenzanteils; Tiefpassfilterung dieses Anteils; und Tabellenabfrage in einem vorgegebenen Hochfrequenz Kennfeld basierend auf dem gefilterten Hochfrequenzanteil und der Lenkradwinkelgeschwindigkeit. Das Hochfrequenz Kennfeld enthält Hochfrequenzfaktoren für Hochfrequenz- und Niederfrequenzbereiche des Torsionsmoments bei unterschiedlichen Winkelgeschwindigkeiten.

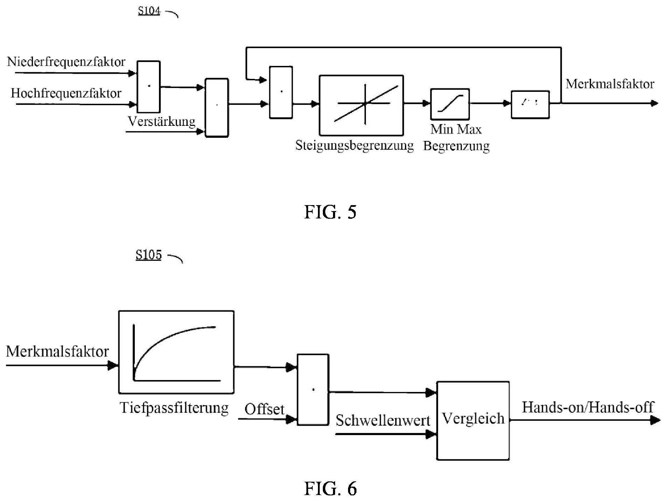

Figur 4 zeigt S103: Beispielsweise kann die Abszisse den gefilterten Hochfrequenzanteil (oder das gefilterte Torsionsmoment) im Bereich 0-10 Nm und die Ordinate 0-540 °/s zeigen. In der Hochfrequenzregion werden überwiegend negative Hochfrequenzfaktoren gewählt (zumeist keine positiven), deren Betrag die Geschwindigkeit der Hands-off-Erkennung bestimmt. Da die Reaktionsanforderungen bei Hands-off weniger strikt sind, kann der Wertebereich geringer als in der Niederfrequenzregion sein (z. B. -1 bis -10). In der Niederfrequenzregion können z. B. 1-10 verwendet werden. S104: Bestimmen eines Merkmalsfaktors basierend auf Hochfrequenz- und Niederfrequenzfaktor. In einigen Ausführungen werden Hoch- und Niederfrequenzfaktor überlagert, der überlagerte Faktor verstärkt (Gain), mit dem Merkmalsfaktor des vorherigen Zeitpunkts akkumuliert und anschließend einer Steigungsbegrenzung sowie einer Min Max Begrenzung unterzogen, um den aktuellen Merkmalsfaktor zu erhalten. Figur 5 zeigt S104: Zunächst Überlagerung ("+"), anschließend Verstärkung ("x"), danach Akkumulation mit dem verzögerten Merkmalsfaktor des vorherigen Zeitpunkts (vgl. " "), gefolgt von Steigungs- und Min-Max-Begrenzung. Dieser rekursive Akkumulationspfad ermöglicht eine stetige Geschwindigkeitssteuerung der Zustandsidentifikation und eine dynamische, echtzeitfähige Erkennung über längere Betriebsphasen.

S105: Identifizieren des Hands-on-/Hands-off-Zustands basierend auf dem Merkmalsfaktor. In einigen Ausführungen wird der Merkmalsfaktor tiefpassgefiltert, ein Offset hinzugefügt, um ihn in einem vorgegebenen Bereich zu halten, anschließend der offsetbehaftete gefilterte Merkmalsfaktor mit einem Schwellenwert verglichen und der Zustand gemäß Vergleichsergebnis bestimmt.

Figur 6 zeigt S105: Nach Tiefpassfilterung und Offset-Addition (z. B. Begrenzung auf 0-1) erfolgt der Vergleich mit einem Schwellenwert zur Unterscheidung Handson/Hands-off. In einigen Ausführungen wird bei einem offsetbehafteten gefilterten Merkmalsfaktor kleiner als ein Hands off Schwellenwert der Hands off Zustand bestimmt, andernfalls (größer/gleich) der Hands on Zustand. Eine binäre Kodierung (z. B. "0" für Hands-off, "1" für Hands-on) ist möglich, jedoch nicht beschränkend.

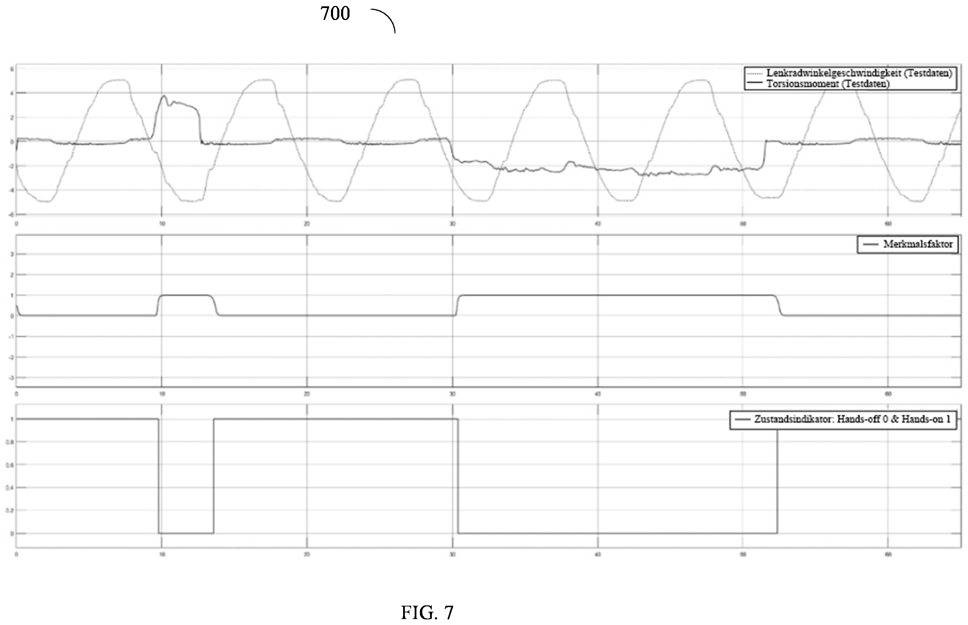

Figur 7 zeigt exemplarische Wellenformen 700 bei Eintritt des EHPS in einen Winkelregelmodus mit zufälligen Sequenzen von Hands-on/Hands-off. Oben sind Torsionsstab Momentsignal und Lenkradwinkelgeschwindigkeit (Zeit auf der Abszisse), in der Mitte der Merkmalsfaktor, unten der Zustandsindikator dargestellt. Es zeigt sich, dass sich der Zustand in Echtzeit und mit hoher Genauigkeit aus dem Merkmalsfaktor, der Torsionsmoment und Lenkradwinkelgeschwindigkeit kombiniert, bestimmen lässt. Fahrzeugabhängig können Kalibrierwerte (Gains der Nieder-/Hochfrequenz Kennfelder, Tiefpassfilterparameter, Schwellenwerte) zur Balance von Genauigkeit und Reaktionszeit angepasst werden.

Die vorgeschlagene Lösung nutzt die Frequenzänderungen des Torsionsstab Momentsignals zur Zustandsidentifikation. Durch getrennte Extraktion von Hoch- und Niederfrequenzmerkmalen und kennfeldbasierte Gain-Einstellungen in Abhängigkeit von Torsionsmoment und Lenkradgeschwindigkeit wird sowohl die Signaltrennschärfe als auch die Eignung für unterschiedliche Betriebsfälle verbessert. Die rekursive Akkumulation ermöglicht eine kontinuierliche Geschwindigkeitssteuerung der Erkennung und erhöht die Robustheit.

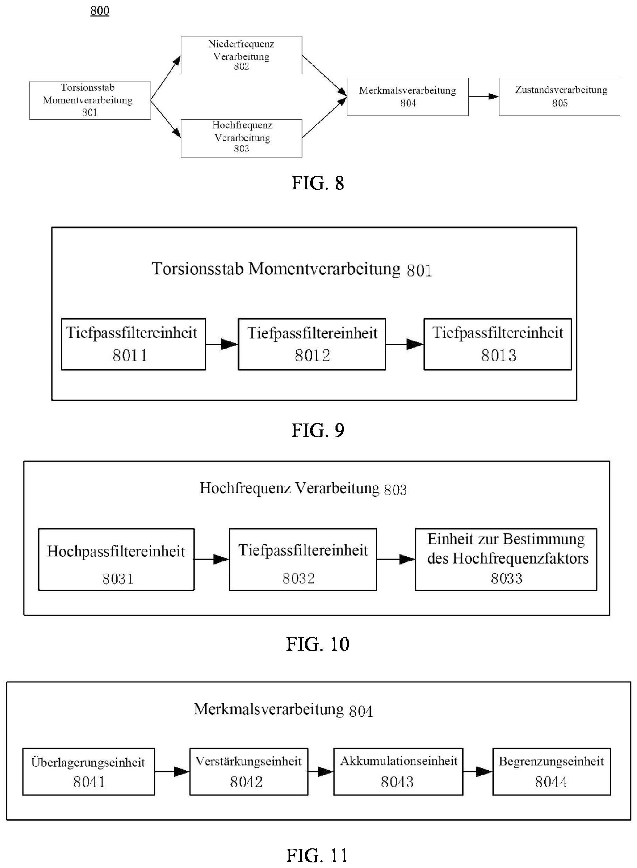

Figur 8 zeigt ein System 800 mit:
- Torsionsstab Momentverarbeitung 801,
- Niederfrequenz Verarbeitung 802,
- Hochfrequenz Verarbeitung 803,
- Merkmalsverarbeitung 804 und
- Zustandsverarbeitung 805.

Figur 9 zeigt, dass die Torsionsstab Momentverarbeitung 801 kaskadierte Mehrstufen Tiefpass Filtereinheiten 8011, 8012, 8013 aufweisen kann; die Tiefpassfilterung erfolgt stufenweise.

In einigen Ausführungen ist das Niederfrequenz Verarbeitungsmodul 802 zur Tabellenabfrage in einem vorgegebenen Niederfrequenz Kennfeld basierend auf gefiltertem Torsionsstab Momentsignal und Lenkradwinkelgeschwindigkeit eingerichtet.

Figur 10 zeigt für das Hochfrequenz Verarbeitungsmodul 803:
- Hochpassfiltereinheit 8031 zur Extraktion eines Hochfrequenzanteils,
- Tiefpassfiltereinheit 8032 für diesen Anteil und
- Einheit 8033 zur Bestimmung des Hochfrequenzfaktors per Tabellenabfrage in einem vorgegebenen Hochfrequenz Kennfeld.

Figur 11 zeigt das Merkmalsverarbeitungsmodul 804 mit:
- Überlagerungseinheit 8041,
- Verstärkungseinheit 8042,
- Akkumulationseinheit 8043 und
- Begrenzungseinheit 8044 (Steigungs- und Min Max Begrenzung).

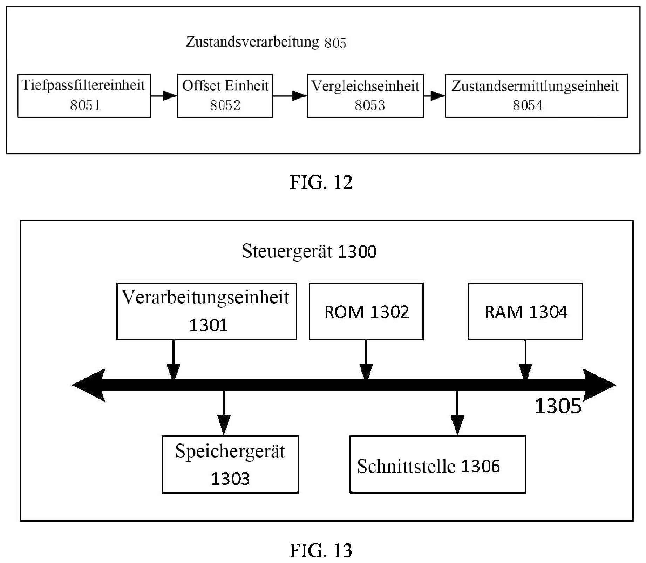

Figur 12 zeigt das Zustandsverarbeitungsmodul 805 mit:
- Tiefpass Filtereinheit 8051,
- Offset Einheit 8052,
- Vergleichseinheit 8053 und
- Zustandsermittlungseinheit 8054, die basierend auf dem Vergleich Hands-on-/Hands-off bestimmt. In einigen Ausführungen: Hands off bei offsetbehaftetem gefiltertem Merkmalsfaktor < Hands off Schwellenwert; Hands on bei ≥ Hands off Schwellenwert.

Die vorliegende Lösung ist echtzeitfähig und robust gegenüber unterschiedlichen Betriebsfällen. Parameter der Kennfelder sowie Filter- und Schwellwerte können fahrzeugspezifisch kalibriert werden.

Darüber hinaus wird ein Fahrzeugsteuergerät 1300 (Figur 13) beschrieben, das eine Verarbeitungseinheit 1301 (z. B. CPU/GPU), ROM 1302, Speichergerät 1303, RAM 1304 und einen Bus 1305 umfasst. Eine Schnittstelle 13013 bindet Peripherie an. Die gezeigte Architektur ist beispielhaft; Komponenten können entfallen, ergänzt oder zusammengefasst sein. Die in den Flussdiagrammen beschriebenen Prozesse können als Computerprogramm implementiert und von 1301 ausgeführt werden. Das Programm kann von 1303 installiert oder aus 1302 bzw. aus einem Netzwerk geladen werden. Ein computerlesbares Speichermedium kann sämtliche Anweisungen enthalten. Geeignete Programmiersprachen umfassen objektorientierte (z. B. Java, Smalltalk, C++) und prozedurale Sprachen (z. B. C).

Die in den Zeichnungen gezeigten Funktionsblöcke können Module/Programmsegmente/Kodeanteile mit ausführbaren Anweisungen repräsentieren. Die Anmeldung ist nicht auf die dargestellten Strukturen/Schritte beschränkt; bekannte Strukturen/Methoden sind der Übersicht halber nicht ausführlich beschrieben. Abweichungen, Ergänzungen und Umordnungen von Schritten sind innerhalb des Schutzumfangs möglich. Der Schutzbereich ergibt sich aus den Ansprüchen.

## Patentansprüche

1. Verfahren zur Identifizierung eines Hands-on-/Hands-off-Zustands, umfassend: Durchführen einer Tiefpassfilterung eines Torsionsstab Momentsignals eines elektrohydraulischen Servolenkungssystems (EHPS) eines Fahrzeugs, um ein gefiltertes Torsionsstab Momentsignal zu erhalten; Bestimmen eines Niederfrequenzfaktors basierend auf dem gefilterten Torsionsstab Momentsignal und einer Winkelgeschwindigkeit eines Lenkrads des Fahrzeugs; Bestimmen eines Hochfrequenzfaktors basierend auf dem gefilterten Torsionsstab Momentsignal und der Winkelgeschwindigkeit des Lenkrads des Fahrzeugs; Bestimmen eines Merkmalsfaktors basierend auf dem Hochfrequenzfaktor und dem Niederfrequenzfaktor; und Identifizieren des Hands-on-/Hands-off-Zustands basierend auf dem Merkmalsfaktor.

2. Verfahren nach Anspruch 1, wobei die Tiefpassfilterung eine kaskadierte Mehrstufen Tiefpassfilterung umfasst.

3. Verfahren nach Anspruch 1, wobei das Bestimmen des Niederfrequenzfaktors Folgendes umfasst: Bestimmen des Niederfrequenzfaktors durch Tabellenabfrage in einem vorgegebenen Niederfrequenz Kennfeld basierend auf dem gefilterten Torsionsstab Momentsignal und der Winkelgeschwindigkeit des Lenkrads des Fahrzeugs, wobei das vorgegebene Niederfrequenz Kennfeld Niederfrequenzfaktoren umfasst, die Hochfrequenz und Niederfrequenzbereiche des Torsionsstab Moments bei unterschiedlichen Lenkradwinkelgeschwindigkeiten abdecken.

4. Verfahren nach Anspruch 1, wobei das Bestimmen des Hochfrequenzfaktors Folgendes umfasst: Durchführen einer Hochpassfilterung des gefilterten Torsionsstab Momentsignals, um einen Hochfrequenzsignalanteil zu extrahieren; Durchführen einer Tiefpassfilterung des extrahierten Hochfrequenzsignalanteils; und Bestimmen des Hochfrequenzfaktors durch Tabellenabfrage in einem vorgegebenen Hochfrequenz Kennfeld basierend auf dem gefilterten Hochfrequenzsignalanteil und der Winkelgeschwindigkeit des Lenkrads des Fahrzeugs, wobei das vorgegebene Hochfrequenz Kennfeld Hochfrequenzfaktoren umfasst, die Hochfrequenz und Niederfrequenzbereiche des Torsionsstab Moments bei unterschiedlichen Lenkradwinkelgeschwindigkeiten abdecken.

5. Verfahren nach Anspruch 1, wobei das Bestimmen des Merkmalsfaktors Folgendes umfasst: Überlagern des Hochfrequenzfaktors und des Niederfrequenzfaktors, um einen überlagerten Faktor zu erhalten; Anwenden einer Verstärkung auf den überlagerten Faktor; Akkumulieren des verstärkten überlagerten Faktors mit einem Merkmalsfaktor eines vorherigen Zeitpunkts; und Unterziehen des akkumulierten Faktors einer Steigungsbegrenzung und einer Min Max Begrenzung, um einen aktuellen Merkmalsfaktor zu erhalten.

6. Verfahren nach Anspruch 1, wobei das Identifizieren des Hands-on-/Hands-off-Zustands Folgendes umfasst: Tiefpassfiltern des Merkmalsfaktors; Hinzufügen eines Offsets zu dem gefilterten Merkmalsfaktor, um ihn innerhalb eines vorgegebenen Bereichs zu halten; Vergleichen des offsetbehafteten gefilterten Merkmalsfaktors mit einem Schwellenwert; und Bestimmen des Hands-on-/Hands-off-Zustands basierend auf dem Ergebnis des Vergleichs.

7. Das System nach Anspruch 6, wobei: ein Hands off Zustand bestimmt wird, wenn der offsetbehaftete gefilterte Merkmalsfaktor kleiner als ein Hands off Schwellenwert ist; und ein Hands on Zustand bestimmt wird, wenn der offsetbehaftete gefilterte Merkmalsfaktor größer oder gleich dem Hands off Schwellenwert ist.

8. System zur Identifizierung eines Hands-on-/Hands-off-Zustands, umfassend: ein Modul zur Torsionsstab Momentverarbeitung, das eingerichtet ist, eine Tiefpassfilterung eines Momentsignals eines Torsionsstabs eines elektrohydraulischen Servolenkungssystems eines Fahrzeugs durchzuführen, um ein gefiltertes Momentsignal zu erhalten; ein Niederfrequenz Verarbeitungsmodul, das eingerichtet ist, einen Niederfrequenzfaktor basierend auf dem gefilterten Momentsignal und einer Winkelgeschwindigkeit eines Lenkrads des Fahrzeugs zu bestimmen; ein Hochfrequenz Verarbeitungsmodul, das eingerichtet ist, einen Hochfrequenzfaktor basierend auf dem gefilterten Momentsignal und der Winkelgeschwindigkeit des Lenkrads des Fahrzeugs zu bestimmen; ein Merkmalsverarbeitungsmodul, das eingerichtet ist, einen Merkmalsfaktor basierend auf dem Hochfrequenzfaktor und dem Niederfrequenzfaktor zu bestimmen; und ein Zustandsverarbeitungsmodul, das eingerichtet ist, den Hands-on-/Hands-off-Zustand basierend auf dem Merkmalsfaktor zu identifizieren.

9. System nach Anspruch 8, wobei das Modul zur Torsionsstab Momentverarbeitung kaskadierte Mehrstufen Tiefpass Filtereinheiten umfasst, und die Tiefpassfilterung stufenweise durch die Mehrstufen Tiefpass Filtereinheiten durchgeführt wird.

10. System nach Anspruch 8, wobei das Niederfrequenz Verarbeitungsmodul eingerichtet ist, den Niederfrequenzfaktor durch Tabellenabfrage in einem vorgegebenen Niederfrequenz Kennfeld basierend auf dem gefilterten Torsionsstab Momentsignal und der Winkelgeschwindigkeit des Lenkrads des Fahrzeugs zu bestimmen, wobei das vorgegebene Niederfrequenz Kennfeld Niederfrequenzfaktoren umfasst, die Hochfrequenz und Niederfrequenzbereiche des Torsionsstab Moments bei unterschiedlichen Lenkradwinkelgeschwindigkeiten abdecken.

11. System nach Anspruch 8, wobei das Hochfrequenz Verarbeitungsmodul umfasst: eine Tiefpass Filtereinheit, die eingerichtet ist, eine Hochpassfilterung des gefilterten Torsionsstab Momentsignals durchzuführen, um einen Hochfrequenzsignalanteil zu extrahieren; eine Tiefpass Filtereinheit, die eingerichtet ist, eine Tiefpassfilterung des extrahierten Hochfrequenzsignalanteils durchzuführen; und eine Einheit zur Bestimmung des Hochfrequenzfaktors, die eingerichtet ist, den Hochfrequenzfaktor durch Tabellenabfrage in einem vorgegebenen Hochfrequenz Kennfeld basierend auf dem gefilterten Hochfrequenzsignalanteil und der Winkelgeschwindigkeit des Lenkrads des Fahrzeugs zu bestimmen, wobei das vorgegebene Hochfrequenz Kennfeld Hochfrequenzfaktoren umfasst, die Hochfrequenz und Niederfrequenzbereiche des Torsionsstab Moments bei unterschiedlichen Lenkradwinkelgeschwindigkeiten abdecken.

12. System nach Anspruch 8, wobei das Merkmalsverarbeitungsmodul umfasst: eine Überlagerungseinheit, die eingerichtet ist, den Hochfrequenzfaktor und den Niederfrequenzfaktor zu überlagern, um einen überlagerten Faktor zu erhalten; eine Verstärkungseinheit, die eingerichtet ist, eine Verstärkung auf den überlagerten Faktor anzuwenden; eine Akkumulationseinheit, die eingerichtet ist, den verstärkten überlagerten Faktor mit einem vorherigen Merkmalsfaktor zu akkumulieren; und eine Begrenzungseinheit, die eingerichtet ist, den akkumulierten Faktor einer Steigungsbegrenzung und einer Min Max Begrenzung zu unterziehen, um einen aktuellen Merkmalsfaktor zu erhalten.

13. System nach Anspruch 8, wobei das Zustandsverarbeitungsmodul umfasst: eine Tiefpass Filtereinheit, die eingerichtet ist, den Merkmalsfaktor tiefzupassfiltern; eine Offset Einheit, die eingerichtet ist, einen Offset zu dem gefilterten Merkmalsfaktor hinzuzufügen, um ihn innerhalb eines vorgegebenen Bereichs zu halten; eine Vergleichseinheit, die eingerichtet ist, den offsetbehafteten gefilterten Merkmalsfaktor mit einem Schwellenwert zu vergleichen; und eine Zustandsermittlungseinheit, die eingerichtet ist, den Hands-on-/Hands-off-Zustand basierend auf einem Ergebnis des Vergleichs zu bestimmen.

14. System nach Anspruch 13, wobei die Zustandsermittlungseinheit eingerichtet ist, einen Hands off Zustand zu bestimmen, wenn der offsetbehaftete gefilterte Merkmalsfaktor kleiner als ein Hands off Schwellenwert ist; und einen Hands on Zustand zu bestimmen, wenn der offsetbehaftete gefilterte Merkmalsfaktor größer oder gleich dem Hands off Schwellenwert ist.
